# FASCICULE DE BREVET EUROPEEN

(11) **EP 2 339 842 B1**
(45) Date de publication et mention de la délivrance du brevet: **02.01.2013**
(21) Numéro de dépôt: 10014284.3
(22) Date de dépôt: 04.11.2010
(51) Int. Cl.: H04N 5/783, G11B 27/00

(54) **Procédé et dispositif de contrôle de la vitesse de restitution d'une séquence vidéo numérique compressée**
Verfahren und Vorrichtung zur Regelung der Wiedergabegeschwindigkeit eines kodierten digitalen Videosequenz
Method and apparatus for controlling the playback speed of a coded digital video sequence

(30) Priorité: 18.11.2009 FR 0905540
(43) Date de publication de la demande: 29.06.2011
(73) Titulaire: STMicroelectronics (Grenoble 2) SAS, 38000 Grenoble (FR)
(72) Inventeur: Bohrer, Roland, 38134 St Julien de Ratz (FR); Haller, Roselyne, 38320 Brie et Angonnes (FR); Leblanc Sébastien, 38600 Fontaine (FR)
(74) Mandataire: Marchand, André

(56) Documents cités:
- US-A- 5 740 307
- US-A1- 2004 001 696
- US-A1- 2009 037 972

## Description

La présente invention concerne le contrôle de la vitesse de restitution d'une séquence vidéo numérique compressée, telle qu'une séquence au format de type MPEG-2 ou MPEG-4.

La compression d'une séquence vidéo numérique exploite la redondance d'information spatiale et/ou temporelle. Les séquences vidéo compressées comprennent généralement des trames indépendantes et des trames dépendantes. Une trame indépendante peut être codée ou décodée en utilisant uniquement des informations de la trame elle-même. Une trame dépendante au contraire est codée ou décodée en utilisant des informations d'une ou plusieurs autres trames de la séquence vidéo. Dans certains formats de compression vidéo numérique tels que MPEG-2 et MPEG-4, les trames d'une séquence vidéo sont organisées en groupes de trames de structures identiques, comprenant des trames indépendantes, de type I, des trames dépendantes de référence, de type P, et des trames dépendantes non de référence, de type B. Une trame de type I est compressée en exploitant des redondances spatiales internes de blocs d'image de la trame. Les trames dépendantes de type P sont formées de blocs d'image codés à partir d'une trame de type I ou P précédente dans le groupe de trames. Les trames de type B sont formées de blocs d'image codés à partir d'une trame de type I ou P précédente et/ou suivante dans le groupe de trames.

Une séquence vidéo peut être restituée non seulement à une vitesse nominale, mais également à des vitesses différentes qui peuvent être plus rapides ou plus lentes, voire même négatives lorsque la séquence est restituée à rebours (dans l'ordre inverse de la prise de vue). La restitution d'une séquence vidéo à une vitesse différente de la vitesse nominale est appelée "Trickmode". Dans ce mode, plusieurs critères de qualité peuvent être définis. Ainsi, un critère de précision de vitesse détermine si une consigne de vitesse est atteinte correctement. La précision de vitesse peut être mesurée en comparant le temps écoulé et la durée à la vitesse nominale de la séquence restituée. Un critère de fluidité d'affichage est relatif au taux de rafraichissement des trames affichées. Un autre critère est lié à la régularité de ce taux de rafraichissement donné par la variance du taux de rafraichissement par unité de temps. Un autre critère est lié à la répartition temporelle des trames affichées dans une séquence vidéo et peut être mesuré par la variance du taux de rafraichissement par trame de la séquence vidéo. Certains de ces critères apparaissent antinomiques, si bien qu'une optimisation du traitement d'une séquence vidéo pour satisfaire un ou plusieurs critères n'est possible qu'au détriment d'un ou plusieurs autres critères. Il apparaît donc souhaitable de pouvoir choisir sur la base de quel critère ce traitement peut être optimisé.

Généralement, un appareil de restitution de séquence vidéo comprend un décodeur qui reçoit des trames d'une séquence vidéo à décoder. Le décodeur décode toutes les trames reçues et incrémente un compteur de trame décodées à chaque fois qu'une trame est décodée. Dès que le compteur passe à 1, une trame décodée est transmise à un dispositif de contrôle d'affichage à une fréquence de trame. A chaque fois qu'une trame est transmise au dispositif de contrôle d'affichage, le compteur de trame est décrémenté. Si le compteur atteint 0, cela signifie que le décodeur n'est pas capable de décoder toutes les trames à la fréquence de trame. Le dispositif de contrôle d'affichage duplique la dernière trame décodée. Par ailleurs, pour rattraper son retard, le décodeur passe dans un mode dégradé dans lequel, certaines trames ne sont pas décodées. Les trames non décodées sont choisies en priorité parmi les trames de type B, puis les trames de type P et enfin les trames de type I. Il en résulte que la distribution des trames affichées n'est pas contrôlée, ce qui se traduit souvent par des effets d'oscillation de vitesse de restitution de la séquence vidéo.

Par ailleurs, si la vitesse de restitution de la séquence vidéo est modifiée, tandis que le compteur est à une valeur supérieure à 1, le changement de vitesse de restitution ne peut pas être pris en compte tant que les trames décodées en attente de restitution au moment de la modification de la vitesse de restitution n'ont pas été restituées.

US 2009/037972 A1 divulgue un procédé qui utilise un seuil de synchronisation pour déterminer successivement si chacune des trames d'une vidéo doit être affichée, sautée, ou répétée.

Il peut donc être souhaitable de pouvoir agir en temps réel sur la vitesse de restitution d'une séquence vidéo. Il peut être également souhaitable de privilégier certains des critères décrits précédemment afin d'améliorer la qualité de la restitution d'une séquence vidéo quelle que soit la vitesse de restitution de la séquence vidéo. Il peut être également souhaitable de sélectionner des trames à décoder si les ressources de calcul de décodage et de stockage temporaire sont insuffisantes en raison d'une vitesse de restitution trop élevée et/ou de la coexistence d'autres processus de décodage occupant ces ressources. Dans ce dernier cas, il peut être souhaitable de gérer une qualité de service en répartissant les ressources de calcul et de stockage temporaire entre plusieurs processus de décodage, par exemple en fonction de niveaux de priorité.

En outre, lorsque la vitesse de restitution est sensiblement comprise entre 0,5 et 2 fois la vitesse nominale, il peut être également souhaitable de restituer également le son en respectant la synchronisation entre l'image et le son.

Un mode de réalisation concerne un procédé de restitution d'une séquence de trames vidéo numériques compressées, comprenant des étapes de décodage de trames de la séquence, et de restitution de trames décodées en fonction d'une consigne de vitesse de restitution. Selon un mode de réalisation, le procédé comprend des étapes consistant à attribuer à chaque trame une durée d'affichage déterminée en fonction de la consigne de vitesse de restitution, et à chaque période d'un signal de synchronisation de trame : si une valeur de comptage représentant une valeur cumulée de durée d'affichage, est égale ou supérieure à une valeur de seuil correspondant à la période du signal de synchronisation, restituer une trame décodée préalablement acquise et diminuer la valeur de comptage de la valeur de seuil, et si la valeur de comptage est inférieure à la valeur de seuil, acquérir une nouvelle trame décodée et ajouter à la valeur de comptage la durée d'affichage attribuée à la nouvelle trame acquise, jusqu'à ce que la valeur de comptage soit égale ou supérieure à la valeur de seuil, restituer une dernière trame décodée acquise et diminuer la valeur de comptage de la valeur de seuil.

Selon un mode de réalisation, le procédé comprend avant l'étape de décodage des trames de la séquence, une étape de sélection de trames vidéo à restituer parmi les trames vidéo de la séquence vidéo, en fonction de la consigne de vitesse de restitution, et une étape de réévaluation de la durée d'affichage attribuée à chaque trame sélectionnée, de manière à respecter la consigne de vitesse de restitution.

Selon un mode de réalisation, la séquence vidéo comprend des trames indépendantes, des trames dépendantes de référence et des trames dépendantes non de référence, l'étape de sélection de trames vidéo à restituer comprenant une étape de sélection des trames indépendantes seules ou des trames indépendantes et dépendantes de référence seules.

Selon un mode de réalisation, la séquence vidéo comprend des groupes de trames de structures identiques, le procédé comprenant des étapes d'analyse de la structure des groupes de trames de la séquence vidéo, et de retrait d'une trame sélectionnée à restituer si son décodage nécessite une capacité de stockage temporaire supérieure à une capacité de stockage disponible.

Selon un mode de réalisation, la séquence vidéo comprend des groupes de trames de structures identiques, le procédé comprenant des étapes d'analyse de la structure des groupes de trames de la séquence vidéo, et de retrait d'une trame sélectionnée à restituer si le décodage des trames sélectionnées du groupe de trames nécessite une capacité de traitement supérieure à une capacité de traitement disponible.

Selon un mode de réalisation, la séquence vidéo comprend des groupes de trames de structures identiques, le procédé comprenant des étapes d'évaluation d'un nombre de trames à mémoriser pour décoder une trame sélectionnée à restituer, et de suppression de la trame sélectionnée à restituer si son décodage nécessite un nombre de trames à mémoriser supérieur à une capacité de stockage disponible.

Selon un mode de réalisation, la séquence vidéo comprend des groupes de trames de structures identiques, le procédé comprenant des étapes d'évaluation d'un nombre de décodages de trame à effectuer pour décoder des trames sélectionnées à restituer du groupe de trames, et de retrait d'une trame sélectionnée à restituer si le nombre de décodages à effectuer excède une capacité de traitement de décodage.

Selon un mode de réalisation, le procédé comprend une étape de correction des durées d'affichage attribuées à des trames sélectionnées à restituer, pour uniformiser les durées d'affichage des trames.

Selon un mode de réalisation, la séquence vidéo comprend des groupes de trames de structures identiques, le procédé comprenant des étapes de suppression de trames parmi des trames sélectionnées à restituer d'un groupe de trames, pour uniformiser une répartition temporelle des trames sélectionnées à restituer.

Un autre mode de réalisation concerne un dispositif de restitution d'une séquence de trames vidéo numériques compressées, comprenant un module de décodage vidéo pour décoder une trame vidéo. Selon un mode de réalisation, le dispositif est configuré pour mettre en oeuvre le procédé défini précédemment.

Des exemples de réalisation de l'invention seront décrits dans ce qui suit, à titre non limitatif en relation avec les figures jointes parmi lesquelles :
- la figure 1 représente schématiquement un dispositif de restitution de séquences vidéo, selon un mode de réalisation,
- la figure 2 représente une séquence d'étapes exécutée par un dispositif de contrôle d'affichage du dispositif de restitution de séquences vidéo, selon un mode de réalisation,
- les figures 3A, 3B et 3C représentent des trames d'une séquence vidéo à différentes étapes de traitement, pour illustrer le fonctionnement du dispositif de contrôle d'affichage représenté sur la figure 2,
- les figures 4A, 4B représentent des trames vidéo d'une séquence vidéo à différentes étapes de traitement, pour illustrer le fonctionnement d'un module de génération de trames vidéo décodées du dispositif de restitution de séquences vidéo, selon un mode de réalisation,
- les figures 5A, 5B représentent des trames vidéo d'une séquence vidéo à différentes étapes de traitement, pour illustrer le fonctionnement du module de génération de trames vidéo décodées, selon un mode de réalisation,
- la figure 6 représente schématiquement un mode de réalisation du module de génération de trames vidéo décodées du dispositif de restitution de séquences vidéo,
- la figure 7 représente une structure de données d'une séquence vidéo,
- la figure 8 représente une arborescence de dépendance de décodage de trames d'un groupe de trames d'une séquence vidéo,
- les figures 9 à 11 représentent des séquences d'étapes exécutées par le module de génération de trames vidéo décodées, selon un mode de réalisation,
- les figures 12A, 12B, 12C représentent des trames vidéo d'une séquence vidéo à différentes étapes de traitement, pour illustrer le fonctionnement du module de génération de trames vidéo décodées, selon un mode de réalisation.

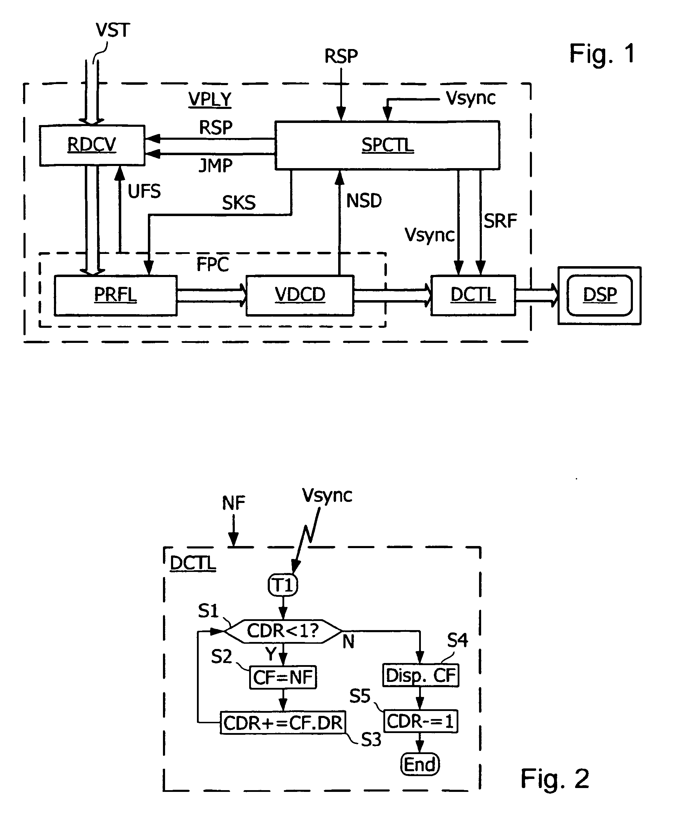

La figure 1 représente un dispositif de restitution de séquences vidéo. Le dispositif de restitution de séquences vidéo VPLY comprend un module de réception de trames vidéo RDCV, un module de génération de trames vidéo décodées FPC, un module de contrôle d'affichage DCTL, et un module de contrôle de vitesse de restitution SPCTL. Le module RDCV reçoit un flux de trames vidéo VST et les transmet au module FPC. Le module RDCV reçoit du module FPC un signal de dépassement de capacité inférieure UFS lorsque le module FPC estime que la cadence de transmission les trames vidéo est insuffisante. Le module RDCV peut également recevoir du module SPCTL un signal de saut JMP pour déclencher un saut de séquence vidéo, dans les trames vidéo transmises au module FPC.

Le module FPC comprend un module de décodage de trames vidéo VDCD configuré pour décoder les trames vidéo fournies par le module RDCV et transmettre des trames vidéo décodées au module DCTL. Le module VDCD transmet au module SPCTL des signaux NSD indiquant à chaque fois qu'une nouvelle trame vidéo a été décodée ou sautée. Le module VDCD est adapté d'une manière classique au format de compression des trames vidéo reçues par le dispositif VPLY.

Le module DCTL reçoit les trames vidéo décodées et un signal de synchronisation d'affichage de trame Vsync à la fréquence d'affichage de trames par le dispositif d'affichage DSP. Le module DCTL fournit à chaque impulsion du signal Vsync une trame vidéo décodée à afficher à un dispositif d'affichage DSP.

Le module SPCTL est configuré pour assurer la commande et la synchronisation des autres modules du dispositif VPLY, en fonction d'une consigne de vitesse d'affichage RSP et des signaux NSD fournis par le module VDCD. En particulier, le module SPCTL maintient à jour un nombre de trames traitées par le module FPC en fonction des signaux NSD et calcule la vitesse effective de restitution de la séquence vidéo. Si cette vitesse effective s'écarte d'une manière trop importante de la vitesse de consigne, le module SPCTL envoie au module DCTL un signal SRF permettant de forcer une duplication ou une suppression de trame lors de la transmission de la séquence vidéo décodée au dispositif d'affichage DSP.

Selon un mode de réalisation, le module RDCV est configuré pour attribuer à chaque trame vidéo reçue une information relative à une durée d'affichage, déterminée en fonction de la consigne de vitesse d'affichage RSP reçue par le module SPCTL. Le module DCTL est alors configuré pour contrôler l'affichage d'une trame vidéo décodée en fonction de la durée d'affichage associée à la trame, c'est-à-dire transmettre une nouvelle trame vidéo décodée, retransmettre une trame vidéo transmise précédemment, ou ne pas transmettre une trame vidéo décodée, au dispositif d'affichage DSP. De cette manière, une consigne de vitesse de restitution peut être prise en compte en temps réel.

La figure 2 représente une séquence d'étapes exécutées par le module DCTL et déclenchée à chaque impulsion du signal de synchronisation Vsync. Sur la figure 2, la séquence d'étapes T1 comprend des étapes S1 à S5. A l'étape S1, la valeur d'un compteur CDR représentant un cumul de durée d'affichage est comparée à une valeur de seuil correspondant à la durée d'une période du signal Vsync, soit par exemple la valeur 1. Si le compteur CDR présente une valeur supérieure ou égale à la valeur de seuil, le module DCT exécute les étapes S4 et S5 pour afficher à nouveau une trame décodée acquise et affichée lors de la période précédente du signal Vsync et décrémenter la valeur du compteur de la valeur de seuil, sinon il exécute les étapes S2 et S3 pour acquérir une nouvelle trame décodée à afficher et ajouter à la valeur du compteur CDR la durée d'affichage de la nouvelle trame, jusqu'à ce que le compteur atteigne ou dépasse la valeur de seuil. Ainsi, à l'étape S2, une nouvelle trame NF reçue par le module DCTL est chargée dans une mémoire tampon CF. A l'étape S3, le compteur CDR est incrémenté de la durée d'affichage DR associée à la trame chargée dans la mémoire CF. L'exécution de la séquence T1 est ensuite poursuivie à partir de l'étape S2. Si à l'étape S2, le compteur CDR est supérieur ou égal à 1, le module DCTL exécute les étapes S4 et S5 pour transmettre la trame contenue dans la mémoire CF au dispositif d'affichage DSP et décrémenter de 1 le compteur CDR. Au contraire, si le compteur CDR est toujours inférieur à 1, les étapes S2 et S3 sont à nouveau exécutées, ce qui signifie que la trame dans la mémoire CF est remplacée par une trame suivante NF dans la séquence vidéo à afficher, sans avoir été transmise au dispositif DSP.

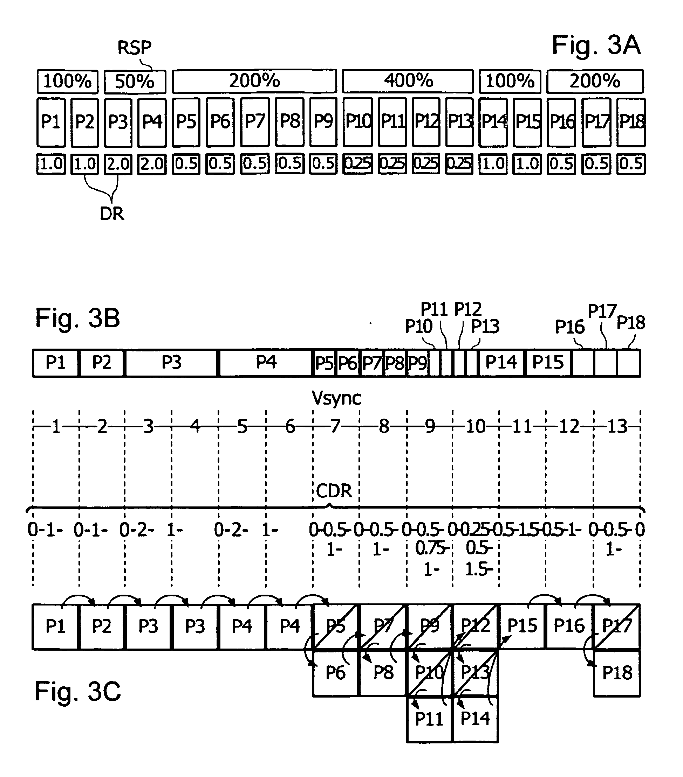

Les figures 3A, 3B et 3C représentent une séquence de trames vidéo P1 à P18. La figure 3A représente la séquence P1-P18 en entrée du module DCTL. La séquence P1-P18 comporte plusieurs portions de séquence ayant reçu différentes consignes de vitesse de restitution RSP. Ainsi les trames P1 et P2 ont reçu une consigne de vitesse égale à 100 %, ce qui signifie que ces trames doivent être affichées à la vitesse nominale. Les trames P3 et P4 ont reçu une consigne RSP égale à 50 %, soit la moitié de la vitesse nominale. La portion de séquence comprenant les trames P5 à P9 a reçu une consigne RSP égale à 200 %, soit deux fois la vitesse nominale. La portion de séquence comprenant les trames P10 à P13 a reçu une consigne RSP égale à 400 %, soit quatre fois la vitesse nominale. Les trames P14 et P15 ont reçu la consigne 100 %, et les trames P16 à P18 la consigne 200 %. La figure 3A indique également la valeur de la durée d'affichage DR qui est attribuée à chaque trame P1 à P18 en fonction de la consigne RSP (égale à l'inverse de la consigne. Ainsi, une consigne de vitesse de restitution RSP à 100 % correspond à une durée d'affichage DR égale à 1, une consigne à 50 % à une durée d'affichage égale à 2, une consigne à 200 % à une durée d'affichage égale à 0.5, et une consigne à 400 % à une durée d'affichage égale à 0.25.

La figure 3B représente la séquence de trames vidéo P1-P18 placée dans une échelle temporelle ayant pour unité la durée d'affichage d'une trame, soit la période du signal de synchronisation trame Vsync. Ainsi, chaque trame P1-P18 est présentée sur la figure 3B avec une longueur correspondant à la durée d'affichage DR qui lui est associée, une trame associée à une durée d'affichage égale à 1 s'étendant sur une longueur correspondant à la période du signal Vsync.

La figure 3C représente la séquence de trames vidéo P1-P18 en sortie du module DCTL, conformément à l'exécution de la séquence T1. Sur la figure 3C, les trames sont placées sur la même échelle temporelle, certaines trames étant barrées pour indiquer qu'elles ne sont pas transmises au dispositif d'affichage DSP. La figure 3C indique également la valeur du compteur CDR. Il apparaît que compte tenu des différentes valeurs de consigne de vitesse de restitution RSP, seules sont affichées les trames P1-P4, P6, P8, P11, P14-P16 et P18, les trames P3 et P4 étant affichées durant deux périodes du signal Vsync pour tenir compte de leur durée d'affichage égale à 2.

A la suite de la transmission des trames P1 et P2 au dispositif d'affichage DSP (aux périodes du signal Vsync numérotées 1 et 2 sur la figure 3C), le compteur CDR passe de 0 à 1 (étape S3), puis est décrémenté de 1 (étape S5). Il en résulte que les trames P1 et P2 sont affichées durant une période du signal Vsync (étape S5). A la suite de la transmission de la trame P3 au dispositif d'affichage DSP (à la période du signal Vsync numérotée 3 sur la figure 3C), le compteur CDR qui a été incrémenté de 2 (étape S3), puis décrémenté de 1 (étape S5), est encore égal à 1 à la période 4. Il en résulte que la trame P3 est transmise deux fois au dispositif DSP (étape S4). Ce traitement est reproduit avec la trame P4. Lors du traitement de la trame P5 (à la période 7 du signal Vsync), le compteur CDR passé à 0 à l'étape S1, est incrémenté de 0.5 (étape S3). Il en résulte que la trame P5 n'est pas affichée (retour à l'étape S1). La trame P6 est chargée dans la mémoire CF, et le compteur CDR est incrémenté de 0,5 et donc atteint la valeur 1. La trame P6 est donc affichée. Ce traitement est reproduit avec les trames P7 et P8. A la période 9 du signal Vsync, la trame P9 est chargée dans la mémoire CF, et le compteur CDR alors à 0 est incrémenté de 0.5 (étape S3). La trame P9 n'est donc pas affichée. La trame P10 est ensuite chargée dans la mémoire CF, et le compteur CDR est incrémenté de 0.25 pour atteindre la valeur 0.75. Comme le compteur CDR n'atteint pas la valeur 1, la trame P10 n'est pas non plus affichée. La trame P11 est alors chargée dans la mémoire CF et le compteur est incrémenté de 0.25 pour atteindre la valeur 1. La trame P11 est donc affichée. A la période 10 du signal Vsync, le compteur CDR repasse à 0 et le traitement décrit ci-dessus est reproduit avec les trames P12 à P14, mais avec des durées d'affichage différentes. Ainsi le compteur CDR passe à 0.25 avec la trame P12, puis à 0.5 avec la trame P13 et à 1.5 avec la trame P14. Les trames P12 et P13 ne sont donc pas affichées, tandis que la trame P14 est affichée. A la période 11 du signal Vsync, le compteur CDR est décrémenté de 1 pour passer à 0.5. La trame P14 n'est donc pas affichée à nouveau, et la trame suivante P15 est chargée dans la mémoire CF. Le compteur CDR est alors incrémenté pour atteindre la valeur 1.5. La trame P15 est donc affichée. A la période 12 du signal Vsync, le compteur CDR est décrémenté de 1 pour passer à 0.5. La trame P15 n'est donc pas affichée à nouveau. La trame suivante P16 est chargée dans la mémoire CF et le compteur est incrémenté pour atteindre la valeur 1. La trame P16 est donc affichée. A la période 13 du signal Vsync, le compteur CDR a été décrémenté de 1 pour passer à 0. Les trames P17 et P18 sont traitées de la même manière que les trames P5 et P6 à la période 7 du signal Vsync. Seule la trame P18 est donc affichée.

Selon un mode de réalisation, le module FPC comprend un module de préfiltrage PRFL configuré pour sélectionner des trames vidéo à restituer parmi les trames vidéo reçues du module RDCV, en fonction de la durée d'affichage attribuée à chaque trame. Le module PRFL peut être activé par exemple si la capacité de traitement de décodage des trames et/ou la capacité de stockage temporaire est insuffisante pour décoder toutes les trames.

Le traitement appliqué par le module PRFL peut consister à sélectionner par un marquage les trames à afficher en fonction de la durée d'affichage associée à chaque trame, et à recalculer la durée d'affichage associée à chaque trame conservée, de manière à ce que la vitesse de restitution de la séquence reste proche de la vitesse de consigne. Par exemple, chaque trame conservée peut être affectée d'une durée d'affichage égale à la durée DR d'affichage initiale de la trame à laquelle sont ajoutées les durées d'affichage qui étaient attribuées aux trames adjacentes suivantes ou précédentes non conservées.

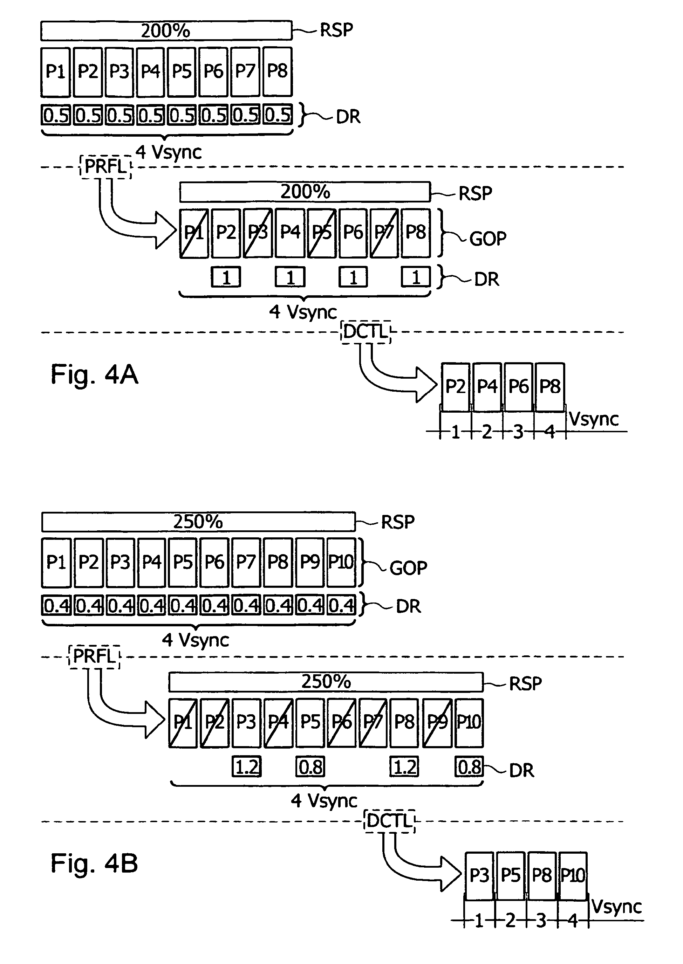

Les figures 4A et 4B représentent des séquences de trames vidéo en entrée et en sortie du module de préfiltrage PRFL, et en sortie du module DCTL. Sur la figure 4A, la séquence vidéo comprend huit trames numérotées P1 à P8. Cette séquence est affectée d'une consigne de vitesse de restitution de 200 % (de la vitesse nominale de restitution). Chaque trame est donc associée à une durée d'affichage DR de 0.5 (fois la période du signal de synchronisation trame Vsync). La séquence vidéo est donc affichée en 4 périodes du signal Vsync. Le traitement de filtrage appliqué à la séquence vidéo par le module PRFL comprend une étape de sélection pour affichage d'une trame sur deux de la séquence vidéo. Ainsi, seules les trames P2, P4, P6 et P8 sont marquées conservées dans la séquence. Le module PRFL recalcule également la durée d'affichage DR associée à chaque trame marquée conservée pour maintenir la durée d'affichage de la séquence à 4 périodes du signal Vsync. Ainsi la durée d'affichage d'une trame conservée peut être calculée en ajoutant à la durée d'affichage initiale de la trame conservée la ou les durées d'affichage des trames non sélectionnées adjacentes précédant ou suivant la trame conservée. Dans l'exemple de la figure 4A, chaque trame marquée conservée P2, P4, P6, P8 est associée à une durée d'affichage de 1 (une période du signal Vsync), résultant de la somme de la durée initiale de la trame conservée et de la durée initiale de la trame précédente ou suivante non conservée. Les trames conservées sont traitées par le module décodeur VDCD, puis transmises au module DCTL qui transmet au dispositif d'affichage une trame décodée par période du signal Vsync, sans opérer de duplication ou de suppression de trame. Toutefois, le décodage de certaines trames conservées peut nécessiter le décodage d'une ou plusieurs trames non conservées. Dans ce cas, le module VDCD procède également aux décodages nécessaires des trames non conservées.

Sur la figure 4B, la séquence vidéo comprend dix trames numérotées P1 à P10. Cette séquence est affectée d'une consigne de vitesse de restitution de 250 %. Chaque trame est donc associée à une durée d'affichage de 0.4. La séquence vidéo est donc affichée en 4 périodes du signal Vsync. Le traitement de filtrage appliqué à la trame par le module PRFL comprend une étape de sélection pour affichage de deux trames sur cinq de la séquence vidéo. Ainsi, seules les trames P3, P5, P8 et P10 de la séquence sont marquées pour affichage. Le module PRFL recalcule également la durée d'affichage associée à chaque trame marquée pour maintenir la durée d'affichage de la séquence à 4 périodes du signal Vsync. Ainsi, les trames marquées P3 et P8 sont associées à une durée d'affichage DR égale à 1.2. La durée d'affichage de la trame P3 est égale à la somme des durées d'affichage initiales des trames P1, P2 et P3, et la durée d'affichage de la trame P9 est égale à la somme des durées d'affichage initiales des trames P6, P7 et P8. Les trames P5 et P10 ont une durée d'affichage DR de 0.8 résultant de la somme des durées initiales d'affichage des trames P4 et P5, et de la somme des durées initiales des trames P9 et P10. Les trames marquées sont traitées par le module décodeur VDCD, puis transmises au module DCTL qui transmet au dispositif d'affichage DSP une trame décodée par période du signal Vsync, sans opérer de duplication ou de suppression de trame. Sur les figures 4A et 4B, le traitement de filtrage réalisé par le module PRFL est effectué de manière à ne marquer que les trames à afficher. De cette manière, le module VDCD peut n'avoir à décoder que les trames qui seront affichées.

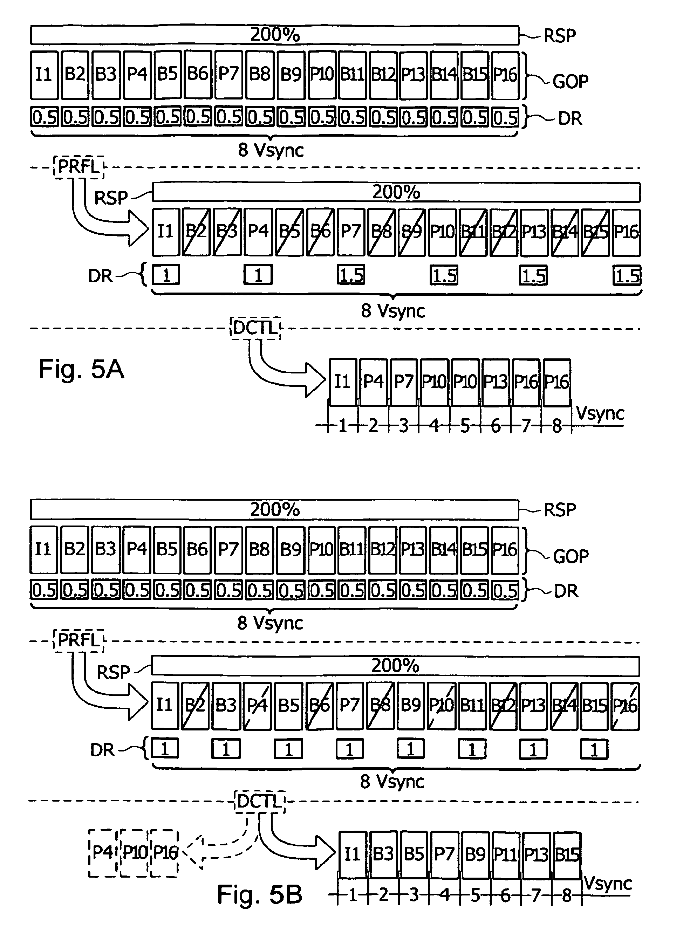

Les figures 5A et 5B représentent des séquences de trames vidéo en entrée et en sortie du module de préfiltrage PRFL, et en sortie du module DCTL. Les figures 5A et 5B illustrent le cas où les trames de la séquence vidéo à décoder et à afficher doivent subir des traitements de décodage différents selon la position de la trame dans la séquence. Ainsi, sur la figure 5A, la séquence vidéo comprend un groupe répétitif GOP de 16 trames numérotées de 11 à P16, dont une trame indépendante, de type 1, et des trames dépendantes, de type P et B. La trame de type 1, numérotée 11 est compressée en exploitant des redondances spatiales de blocs d'image dans la trame. Les trames de type P, numérotées P4, P7, P10, P13 et P16 sont formées de blocs d'image codés à partir de trames de type 1 ou P précédentes dans la séquence vidéo. Les trames de type B, numérotées B2, B3, B5, B6, B8, B9, B11, B12, B14 et B15 sont formées de blocs d'image codés à partir d'une trame de type 1 ou P précédente et d'une trame de type l ou P suivante.

Le traitement appliqué par le module PRFL peut comprendre le marquage des trames à afficher en fonction de leur type. Ainsi, sur la figure 5A, le traitement de filtrage appliqué par le module PRFL comprend le marquage de toutes les trames de type l et P, à l'exclusion de toutes les trames de type B, compte tenu d'une consigne de vitesse de restitution de 200 %. A l'entrée du module PRFL, toutes les trames 11-P16 de la séquence sont associées à une durée d'affichage de 0.5 (fois la période du signal Vsync). En sortie du module PRFL, toutes les trames de type B ne sont pas marquées à afficher, et la durée d'affichage de chaque trame de type 1 ou P marquée à afficher a été modifiée pour que conserver la durée totale d'affichage de la séquence initialement affichée en 8 périodes du signal Vsync, compte tenu du nombre de trames de la séquence et de la consigne de vitesse de restitution. Ainsi, les trames l1 et P4 sont associées à une durée d'affichage DR égale à 1, et les trames P7, P10, P13 et P16 à une durée d'affichage DR égale à 1.5. Les trames marquées à afficher sont traitées par le module VDCD, puis transmises au module DCTL. En sortie du module DCTL, les trames P10 et P16 apparaissent dupliquées une fois, les autres trames n'apparaissant qu'une seule fois, conformément à la durée d'affichage associée à chaque trame, et à la séquence d'étapes T1 représenté sur la figure 2.

Comme la trame 11 suit immédiatement une trame P16 sélectionnée pour être affichée d'un groupe précédent de trames GOP, une durée d'affichage de 0.5 devrait être attribuée à la trame 11, et une durée de 1.5 attribuée à la trame P4. Il en résulte que la trame 11 ne serait pas affichée et la trame P4 affichée deux fois, compte tenu de la séquence d'étapes T1. Pour une meilleure fluidité durant l'affichage de la séquence, la durée DR des trames l1 et P4 peut être corrigée à 1 pour chacune de ces deux trames, comme représenté sur la figure 5A.

Sur la figure 5B, le traitement appliqué par le module PRFL applique comme critère de filtrage uniquement la consigne de vitesse RSP, et ne tient pas compte du type (1, P ou B) des trames dans la séquence vidéo. La consigne de vitesse de restitution est fixée à 200 %. Les 16 trames de la séquence vidéo l1-P16 doivent dont être affichées en 8 périodes du signal Vsync. Le module PRFL applique à la séquence un traitement consistant à ne marquer pour affichage qu'une trame sur deux de la séquence, et à associer à chaque trame marquée une durée d'affichage égale à 1. Ainsi, les trames marquées à afficher comprennent les trames 11, B3, B5, P7, B9, B11, P13 et B15. Parmi les trames marquées, se trouvent la trame B5 qui ne peut être décodée qu'à l'aide des trames P4 et P7, la trame B9 qui ne peut être décodée qu'à l'aide des trames P7 et P10, et la trame B15 qui ne peut être décodée qu'à l'aide des trames P13 et P16, les trames P4, P10 et P16 n'étant pas marquées. Il en résulte que les trames P4, P10 et P16 doivent également être traitées par le module VDCD. Par rapport au mode de filtrage illustré par la figure 5A, le mode de filtrage illustré par la figure 5B présente les avantages de ne pas nécessiter d'analyse de la structure de la trame vidéo pour déterminer les emplacements respectifs des différents types de trames, et de respecter des critères de fluidité et de régularité en ce qui concerne la restitution de séquence vidéo. En contrepartie, ce mode de filtrage nécessite davantage de puissance de calcul et de stockage temporaire pour le module de décodage VDCD, puisque 3 trames supplémentaires sur 16 doivent être décodées.

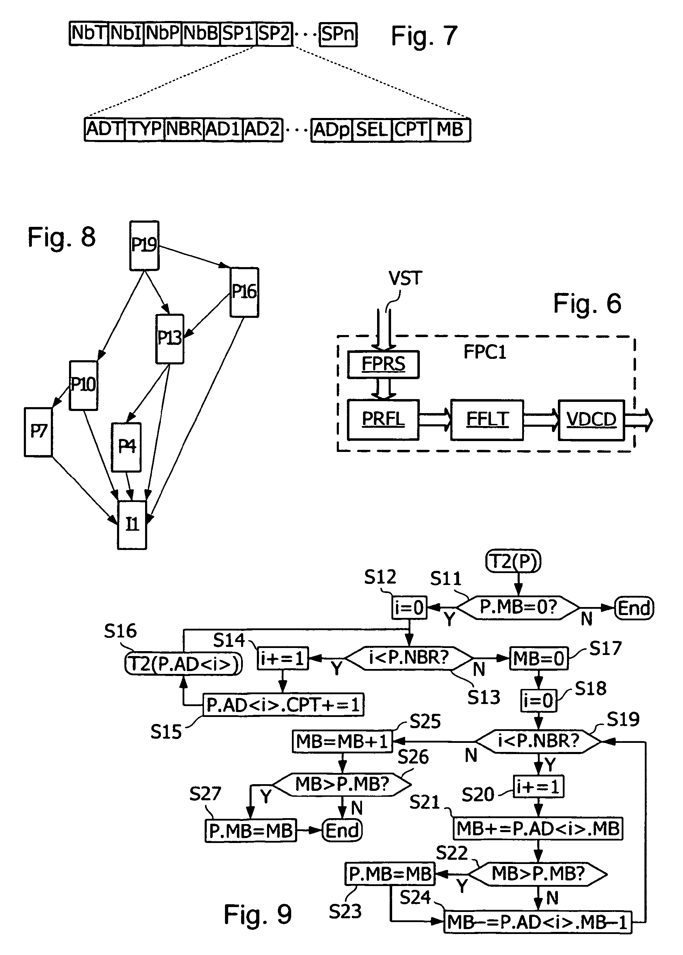

Dans le cas où le traitement de filtrage réalisé par le module PRFL est appliqué à une séquence vidéo dont les trames doivent recevoir des traitements de décodage différents selon la position de la trame dans un groupe de trames répétitif GOP (d'une trame de type 1 jusqu'à une trame de type 1 suivante) de la séquence, le module de génération de trames vidéo décodées peut être modifié comme représenté sur la figure 6. Ainsi la figure 6 représente un module FPC1 qui diffère du module FPC représenté sur la figure 1 en ce qu'il comprend un module d'analyse FPRS de la structure de la séquence vidéo disposé en amont du module PRFL, et un module de filtrage fin FFLT interposé entre les modules PRFL et le module VDCD.

Le module FPRS analyse la séquence vidéo reçue pour renseigner une structure de données décrivant les caractéristiques d'un groupe de trames GOP de la séquence vidéo. Un exemple d'une telle structure est représenté sur la figure 7. Cette structure de données comprend pour un groupe de trames GOP les données suivantes :
- nombre de trames NbT du groupe de trames GOP,
- nombre de trames de type 1 à décoder Nbl dans le groupe de trames,
- nombre de trames de type P à décoder NbP dans le groupe de trames,
- nombre de trames de type B à décoder NbB dans le groupe de trames, et
- une structure de données SP1, SP2, ... SPn pour chaque trame du groupe de trames, n étant le nombre de trames dans le groupe de trames.

Chaque structure de données SP1-SPn comprend pour une trames les données suivantes :
- adresse de la trame ADT dans le groupe de trames,
- type TYP de la trame (1, P ou B),
- nombre NBR de trames nécessaires au décodage de la trame,
- adresses AD1, AD2, ... ADp de toutes les trames nécessaires au décodage de la trame, p étant le nombre de trames de référence mémorisées dans le champ NBR,
- indicateur SEL de sélection pour affichage de la trame,
- compteur de référence CPT indiquant combien de trames utilisent cette trame pour leur décodage, et
- nombre maximum MB de trames à mémoriser pour le décodage de la trame dans le pire des cas.

Les champs adresses AD1-ADp des trames nécessaires pour le décodage d'une trame définissent une arborescence de dépendance de trames parmi les trames de référence (type 1 ou P). Ainsi, la figure 8 représente un exemple d'une telle arborescence de dépendance. Cette arborescence est relative à un groupe de trames GOP ayant des trames de référence 11, P4, P7, P10, P13, P16 et P19. La trame P19 est liée aux trames P10, P13 et P16, ce qui signifie que le décodage de la trame 19 peut être effectué à partir des trames décodées P10, P13 et P16. La trame P16 peut être décodée à partir des trames décodées 11 et P13. La trame P13 peut être décodée à partir des trames décodées l1 et P4. La trame P10 peut être décodée à partir des trames décodées 11 et P7. Les trames P7 et P4 peuvent être décodées à partir de la trame décodée 11.

Le module FFLT est configuré pour analyser la structure du groupe de trames GOP, déterminée par le module FPRS, et éventuellement pour supprimer des trames à afficher en fonction des capacités de traitement attribuées au module VDCD, en termes de capacité de mémoire disponible pour stocker temporairement des trames décodées, et de nombre de décodages de trame à effectuer pour afficher les trames sélectionnées d'un groupe GOP, compte tenu de la consigne de vitesse de restitution RSP.

La figure 9 représente une séquence d'étapes T2 exécutée pour une trame P d'un groupe de trames GOP, par le module FFLT. La séquence T2 permet de déterminer la valeur du champ P.MB de la trame P, c'est-à-dire le nombre maximum de trames à mémoriser temporairement pour effectuer le décodage de la trame P. La séquence T2 comprend des étapes S11 à S27. A l'étape S11, le module FFLT teste si le champ P.MB de la trame P est à 0 ou non. Si le champ MB est différent de 0, cela signifie que sa valeur a déjà été calculée et la séquence T2 prend fin. Si le champ P.MB est à 0, les étapes S12 et S13 sont exécutées. A l'étape S12, un indice i est initialisé à 0. A l'étape S13, l'indice i est comparé à la valeur du champ P.NBR de la trame P (nombre de trames dont dépend le décodage de la trame P). Si l'indice i est inférieur à la valeur du champ P.NBR, les étapes S14 à S16 sont exécutées. Aux étapes S14 et S15, l'indice i et la valeur du champ CPT de la trame à l'adresse P.AD<i> (P.AD<i>.CPT) sont incrémentés de 1. A l'étape S16, la séquence T2 est appelée (appel récursif) pour la trame à l'adresse P.AD<i> dont dépend le décodage de la trame P. L'exécution de la séquence est ensuite reprise à l'étape S13. En d'autres termes, les étapes S13 à S16 permettent d'appeler la séquence T2 pour toutes les trames aux adresses AD<i> (AD1-ADp), nécessaires au décodage de la trame P, c'est-à-dire situées en aval de la trame P dans l'arborescence de dépendance de décodage. Lorsque toutes les trames aux adresses P.AD1 à P.ADp ont été traitées par la séquence T2, c'est-à-dire présentent un champ MB à une valeur non nulle, les étapes S17 à S19 sont exécutées. Aux étapes S17 et S18, une variable MB et l'indice i sont initialisés à 0. A l'étape S19, l'indice i est à nouveau comparé à la valeur du champ P.NBR de la trame P. Si l'indice i est inférieur à la valeur du champ P.NBR, les étapes S20 à S22 sont exécutées, sinon les étapes S25 et S26 sont exécutées. A l'étape S20, l'indice i est incrémenté de 1. A l'étape S21, la variable MB est incrémentée de la valeur du champ P.AD<i>.MB de la trame à l'adresse P.AD<i>. Aux étapes S22 et S23, si la variable MB est plus grande que la valeur du champ P.MB de la trame P, le champ P.MB reçoit la valeur de la variable MB. Le champ P.MB contient alors le nombre maximum de trames à mémoriser pour effectuer le décodage de la trame P. L'étape S24 suit les étapes S23, et S22 si la variable MB est plus petite ou égale à la valeur du champ P.MB. A l'étape S24, la variable MB est décrémentée de la valeur du champ MB à l'adresse P.AD<i> diminuée de 1. Ainsi, on tient compte du fait qu'une fois que la trame à l'adresse P.AD<i> est décodée, on n'a plus besoin de mémoriser les trames qui ont servi pour le décodage cette trame. Aux étapes S19 à S24, il a été tenu compte du nombre de trames à mémoriser pour décoder chacune des trames aux adresses AD1-ADp nécessaires au décodage de la trame P. A l'étape S25, la variable MB est incrémentée de 1 pour compter la trame P dans le nombre de trames à mémoriser pour décoder la trame P. Aux étapes S26 et S27, si la variable MB est plus grande que la valeur du champ P.MB de la trame P, le champ P.MB reçoit la valeur de la variable MB. L'exécution de la séquence T2 se termine à l'issue des étapes S26 ou S27.

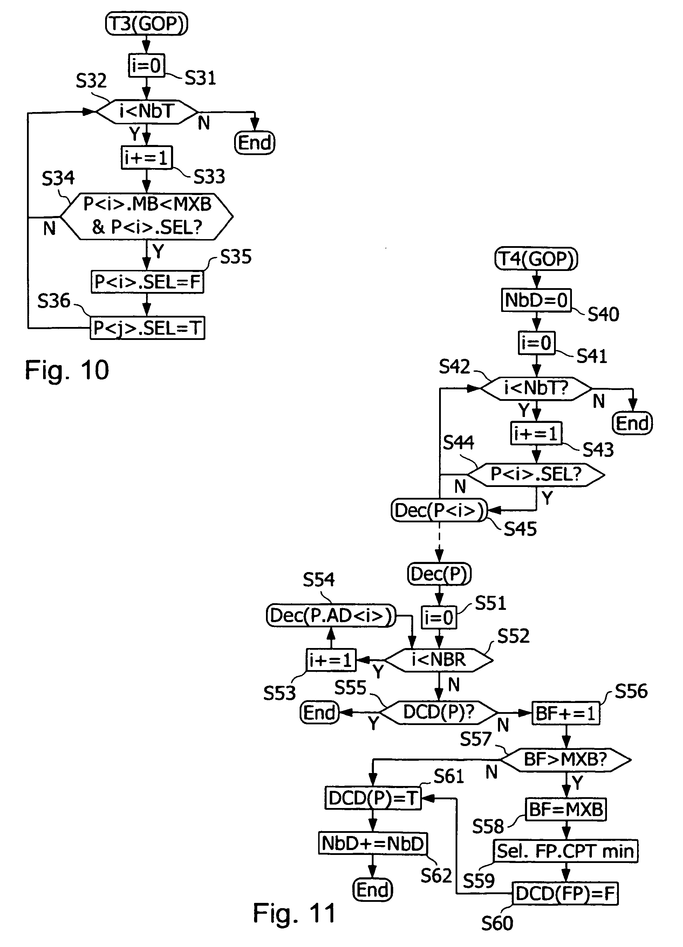

La figure 10 représente une séquence d'étapes T3 exécutée pour un groupe de trames GOP par le module FFLT. La séquence T3 permet de supprimer si nécessaire de l'ensemble des trames sélectionnées pour affichage du groupe GOP, les trames dont la valeur du champ MB est supérieure à une valeur maximum MXB correspondant à la taille de la mémoire disponible pour le décodage des trames de la séquence vidéo VST. La séquence T3 comprend des étapes S31 à S36. A l'étape S31, un indice i est initialisé à 0. A l'étape S32, la valeur de l'indice i est comparée au nombre de trames NbT du groupe de trames GOP. Si l'indice i est inférieur au nombre NbT, les étapes S33 et S34 sont exécutées, sinon la séquence T3 se termine. A l'étape S33, l'indice i est incrémenté de 1. A l'étape S34, il est déterminé si la trame P<i> du groupe GOP est sélectionnée pour être affichée (vérification de la valeur du champ P.SEL), et si la valeur du champ P<i>.MB de la trame P<i> est supérieure à la valeur maximum MXB. Si la trame P<i> est sélectionnée et si la valeur du champ P<i>.MB est supérieure à la valeur MXB, les étapes S35 et S36 sont exécutées, sinon l'exécution de la séquence est poursuivie à l'étape S32. L'étape S35 consiste à ne plus afficher la trame P<i> en changeant l'état du champ P<i>.SEL. L'étape S36 consiste à rechercher parmi les trames les plus proches de la trame P<i>, une trame P<j> (avec j = i+/-1 ou 2) dont le champ MB est inférieur à la valeur maximum MXB. Si une telle trame P<j> est trouvée, le champ SEL de la trame trouvée est changé d'état pour que celle-ci soit affichée.

La figure 11 représente une séquence d'étapes T4 exécutée pour un groupe de trames GOP par le module FFLT. La séquence T4 permet de déterminer le nombre de décodages de trames qui sont nécessaires au décodage de trames sélectionnées pour affichage d'un groupe de trames GOP. La séquence T4 comprend des étapes S40 à S45. Aux étapes S40 et S41, l'indice i et une variable NbD de comptage de nombre de décodages de trame sont initialisés à 0. Les étapes S42 à S45 sont exécutées pour chacune des trames du groupe GOP. A l'étape S42, l'indice i est comparé au nombre de trames NbT du groupe de trames. Si l'indice i est supérieur ou égal au nombre NbT, la séquence T4 est terminée, sinon, l'indice i est incrémenté de 1 (étape S43). Aux étapes S44 et S45, si le champ P<i>.SEL de la trame P<i> indique que la trame est sélectionnée pour être affichée, le module FFLT exécute une séquence Dec pour la trame P<i>. L'exécution de la séquence T4 est ensuite poursuivie à l'étape S42.

La séquence Dec exécutée pour une trame P, comprend des étapes S51 à S62. A l'étape S51 ,un indice i est initialisé à 0. Aux étapes S52 à S54, la séquence Dec est appelée (appel récursif) pour chacune des trames aux adresses P.AD1 à P.ADp, dont dépend le décodage de la trame P. Ainsi, à l'étape S52, l'indice i est comparé à la valeur du champ P.NBR de la trame P. Si l'indice i est inférieur au champ P.NBR, l'indice i est incrémenté de 1 à l'étape S53 et la séquence Dec est appelée pour la trame à l'adresse P.AD<i> (étape S54). Si à l'étape S52, l'indice i a atteint la valeur P.NBR, l'étape S55 est exécutée. A l'étape S55, si la trame n'est pas déjà marquée décodée, les étapes S56 et S57 sont exécutées, sinon la séquence Dec prend fin pour la trame P. A l'étape S56, un compteur BF de nombre de trames à mémoriser pour le décodage du groupe GOP est incrémenté de 1. A l'étape S57, la valeur du compteur BF est comparée à la valeur maximum MXB de trames susceptibles d'être mémorisées temporairement. Si la valeur du compteur BF a atteint la valeur maximum MXB, les étapes S58 à S62 sont exécutées, sinon seules les étapes S61 et S62 sont exécutées.

A l'étape S58, le compteur BF reçoit la valeur maximum MXB. A l'étape S59, il est sélectionné une trame marquée décodée et mémorisée, parmi le groupe de trames GOP, que l'on peut supprimer de la mémoire temporaire. La sélection d'une telle trame peut être effectuée sur la base de la valeur du champ CPT. En effet, pour pénaliser le moins possible le nombre de décodages à effectuer, il peut être sélectionné une trame décodée dont le champ CPT est à une valeur minimum, indiquant qu'un nombre minimum de trames du groupe GOP dépendent pour leur décodage de la trame trouvée sélectionnée. La trame sélectionnée FP est marquée non décodée à l'étape S60. A l'étape S61, la trame P est marquée décodée. A l'étape S62, un compteur de nombre de décodages NbD est incrémenté de 1, et la séquence Dec prend fin pour la trame P.

Si le nombre de décodages NbD obtenu pour le groupe de trames GOP est supérieur à une valeur maximum, il peut être décidé de supprimer des trames sélectionnées pour être affichées en priorité parmi les trames de type B, puis parmi des trames de type P. S'il est souhaité de réduire en priorité l'impact de cette suppression de trame sur l'uniformité de la répartition des trames sélectionnées dans le groupe GOP, les trames de type B les plus proche d'une trame de type P ou 1 peuvent être supprimées en premier, et remplacées par la trame de type P la plus proche si celle-ci n'est pas déjà sélectionnée pour affichage. En effet, dans la plupart des cas, les trames de type P doivent être décodées même si elles ne sont pas sélectionnées. Si l'on connaît le nombre de trames supplémentaires à supprimer pour que le nombre de décodages NbD ne dépasse pas la valeur maximum, les trames supprimées peuvent être réparties le plus uniformément possible dans le groupe GOP. S'il est souhaité de réduire en priorité l'impact de cette suppression de trames sur la constance de la cadence d'affichage des trames, les trames de type B peuvent également être supprimées en priorité.

A chaque fois qu'une trame à afficher du groupe GOP est supprimée (champ P.SEL à faux), la séquence d'étape T4 peut être à nouveau exécutée pour réévaluer le nombre de décodages NbD nécessaires au décodage du groupe GOP. A chaque fois qu'une trame est supprimée, la durée d'affichage DR de chaque trame sélectionnée est recalculée.

Le module FFLT est configuré pour effectuer des corrections sur les durées d'affichage des trames sélectionnées et sur la sélection des trames afin de satisfaire à différents critères sélectionnés par l'utilisateur relatifs notamment à la régularité de la durée d'affichage des trames et à la régularité de répartition des trames dans le temps.

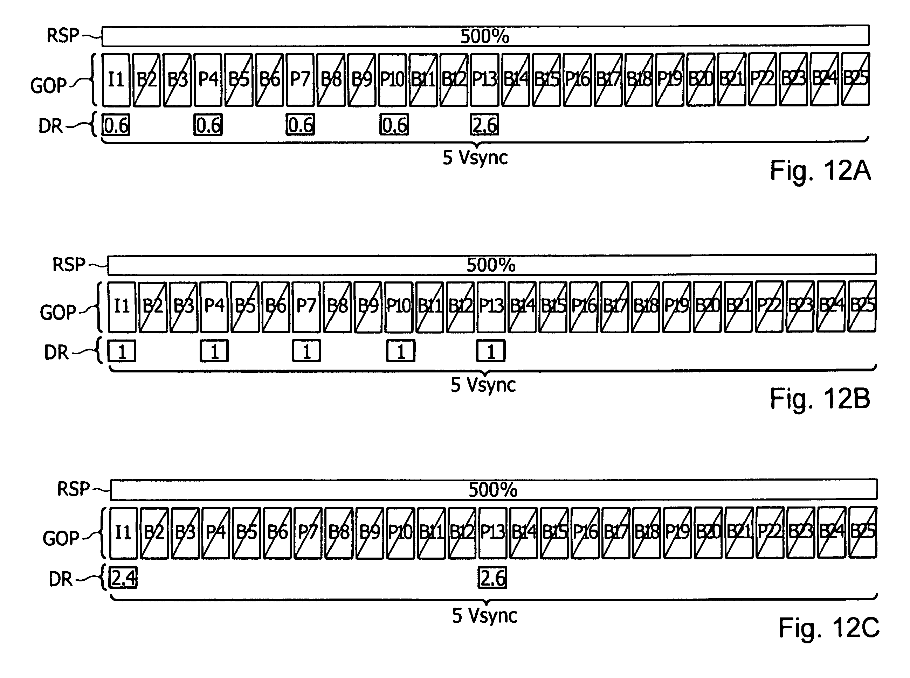

Les figures 12A, 12B, 12C représentent un groupe de trame vidéo GOP en sortie du module FFLT. Sur les figures 12A à 12C, le groupe de trame comprend 25 trames, numérotées de 1 à 25, comprenant des trames de type 1, P et B. La consigne de vitesse RSP a été fixée à 500 %. La durée d'affichage attribuée à chaque trame est donc égale à 0.2. Comme la vitesse est relativement élevée, le module SPCTL a commandé le module PRFL de sélectionner pour restitution uniquement les trames de type 1 et P. Le module PRFL a donc sélectionné uniquement les trames l1, P4, P7, P10, P13, P16, P19 et P22 et leur a attribué une durée d'affichage de 0.6. Généralement, les trames dans la seconde moitié d'un groupe de trames GOP utilisent davantage de trames décodées que les trames dans la première moitié du groupe GOP. La figure 12A illustre le cas où le module FFLT a supprimé des trames sélectionnées les trames P16, P19 et P22, en raison d'une capacité insuffisante en termes de capacité de mémoire temporaire et/ou de capacité de traitement. Le module FFLT a donc attribué une durée d'affichage égale à 2.6 à la dernière trame sélectionnée P13 du groupe GOP. Sur la figure 12A, l'utilisateur n'a activé ni le critère de régularité de la durée d'affichage des trames, ni le critère de régularité de la répartition temporelle des trames. II en résulte qu'il peut être perçu lors de la restitution du groupe de trames un arrêt temporaire sur la trame P13.

Sur la figure 12B, le critère de régularité de la cadence d'affichage des trames a été activé. Le module FFLT a donc attribué une durée d'affichage de 1 à chacune des trames sélectionnées 11, P4, P7, P10 et P13. Comme l'ensemble de la seconde moitié du groupe de trames GOP n'est pas affiché, il peut être perçu lors de la restitution du groupe de trames un saut dans les mouvements des objets ou de la scène filmée entre la trame P13 d'un groupe GOP et la trame 11 du groupe de trames suivant.

Sur la figure 12C, le critère de régularité de la répartition temporelle des trames a été activé. Les trames P4, P7 et P10 ont donc été supprimées des trames sélectionnées pour restitution. Seules les trames 11 et P13 sont conservées et une durée d'affichage de 2.4 a été attribuée à la trame 11, et une durée d'affichage de 2.6 à la trame P13.

Bien entendu, lorsque la vitesse de restitution de la séquence vidéo est positive, la taille de la mémoire affectée au stockage temporaire des trames décodées peut être suffisante. Dans ce cas, il peut ne pas être nécessaire d'exécuter les séquences T2, T3 et T4. En revanche, lorsque la vitesse de restitution de la séquence vidéo est négative, l'exécution des séquences T2, T3 et T4 peut être nécessaire.

II apparaîtra clairement à l'homme de l'art que la présente invention est susceptible de diverses variantes de réalisation et diverses applications. En particulier, l'invention peut être réalisée simplement en contrôlant l'affichage de chaque trame en fonction de la durée d'affichage qui lui est associée, ainsi qu'aux trames précédentes dans la séquence vidéo, compte tenu du sens de restitution (avant ou arrière) de la séquence. Il n'est donc pas nécessaire de sélectionner préalablement les trames à restituer, notamment lorsque la consigne de vitesse d'affichage est voisine de la vitesse nominale d'affichage de la séquence.

Il n'est pas non plus nécessaire de contrôler avant le décodage des trames de la séquence que les capacités de traitement et de stockage disponibles pour le décodage sont suffisantes. En effet, si ces capacités s'avèrent insuffisantes compte tenu de la consigne de vitesse, le décodage d'une trame peut ne pas être effectué.

Par ailleurs, la présente invention ne s'applique pas nécessairement à des séquences vidéo dont les trames sont codées à l'aide d'autres trames. Elle peut en effet s'appliquer également à une séquence vidéo dont les trames sont codées indépendamment les unes des autres.

## Revendications

1. Procédé de restitution d'une séquence de trames vidéo numériques compressées (VST), comprenant des étapes de décodage de trames de la séquence, et de restitution de trames décodées en fonction d'une consigne de vitesse de restitution (RSP),
**caractérisé en ce qu'**il comprend des étapes consistant à attribuer à chaque trame une durée d'affichage (DR) déterminée en fonction de la consigne de vitesse de restitution, et à chaque période d'un signal de synchronisation de trame (Vsync) :
si une valeur de comptage (CDR) représentant une valeur cumulée de durée d'affichage, est égale ou supérieure à une valeur de seuil correspondant à la période du signal de synchronisation, restituer une trame décodée préalablement acquise (CF) et diminuer la valeur de comptage de la valeur de seuil, et
si la valeur de comptage est inférieure à la valeur de seuil, acquérir une nouvelle trame décodée (NF) et ajouter à la valeur de comptage la durée d'affichage attribuée à la nouvelle trame acquise, jusqu'à ce que la valeur de comptage soit égale ou supérieure à la valeur de seuil, restituer une dernière trame décodée acquise et diminuer la valeur de comptage de la valeur de seuil.

2. Procédé selon la revendication 1, comprenant avant l'étape de décodage des trames de la séquence (VST), une étape de sélection de trames vidéo à restituer parmi les trames vidéo de la séquence vidéo, en fonction de la consigne de vitesse de restitution (RST), et une étape de réévaluation de la durée d'affichage (DR) attribuée à chaque trame sélectionnée, de manière à respecter la consigne de vitesse de restitution.

3. Procédé selon la revendication 2, dans lequel la séquence vidéo (VST) comprend des trames indépendantes (I), des trames dépendantes de référence (P) et des trames dépendantes non de référence (B), l'étape de sélection de trames vidéo à restituer comprenant une étape de sélection des trames indépendantes seules ou des trames indépendantes et dépendantes de référence seules.

4. Procédé selon l'une des revendications 1 à 3, dans lequel la séquence vidéo (VST) comprend des groupes de trames (GOP) de structures identiques, le procédé comprenant des étapes d'analyse de la structure des groupes de trames de la séquence vidéo, et de retrait d'une trame sélectionnée à restituer si son décodage nécessite une capacité de stockage temporaire supérieure à une capacité de stockage disponible.

5. Procédé selon l'une des revendications 1 à 4, dans lequel la séquence vidéo (VST) comprend des groupes de trames (GOP) de structures identiques, le procédé comprenant des étapes d'analyse de la structure des groupes de trames de la séquence vidéo, et de retrait d'une trame sélectionnée à restituer si le décodage des trames sélectionnées du groupe de trames nécessite une capacité de traitement supérieure à une capacité de traitement disponible.

6. Procédé selon l'une des revendications 1 à 5, dans lequel la séquence vidéo comprend des groupes de trames (GOP) de structures identiques, le procédé comprenant des étapes d'évaluation d'un nombre de trames à mémoriser pour décoder une trame sélectionnée à restituer, et de suppression de la trame sélectionnée à restituer si son décodage nécessite un nombre de trames à mémoriser (MB) supérieur à une capacité de stockage disponible (MXB).

7. Procédé selon l'une des revendications 1 à 6, dans lequel la séquence vidéo comprend des groupes de trames (GOP) de structures identiques, le procédé comprenant des étapes d'évaluation d'un nombre de décodages de trame (NbD) à effectuer pour décoder des trames sélectionnées à restituer du groupe de trames, et de retrait d'une trame sélectionnée à restituer si le nombre de décodages à effectuer excède une capacité de traitement de décodage.

8. Procédé selon l'une des revendications 1 à 7, comprenant une étape de correction des durées d'affichage (DR) attribuées à des trames sélectionnées à restituer, pour uniformiser les durées d'affichage des trames.

9. Procédé selon l'une des revendications 1 à 8, dans lequel la séquence vidéo comprend des groupes de trames (GOP) de structures identiques, le procédé comprenant des étapes de suppression de trames parmi des trames sélectionnées à restituer d'un groupe de trames, pour uniformiser une répartition temporelle des trames sélectionnées à restituer.

10. Dispositif de restitution d'une séquence de trames vidéo numériques compressées, comprenant un module de décodage vidéo (VDCD) pour décoder une trame vidéo,
**caractérisé en ce qu'**il est configuré pour mettre en oeuvre le procédé selon l'une des revendications 1 à 9.

## Claims

1. Method of playing a compressed digital video sequence (VST), comprising steps of decoding frames of the sequence, and of playing the decoded frames as a function of a playing speed set point (RSP),
**characterized in that** it comprises steps consisting of attributing to each frame a display duration (DR) determined as a function of the playing speed set point, and at each period of a frame synchronization signal (Vsync):
if a count value (CDR) representative of a display duration cumulative value is equal to or greater than a threshold value corresponding to the period of the synchronization signal, playing a previously acquired decoded frame (CF) and decreasing the count value of the threshold value; and
if the count value is less than the threshold value, acquiring a new decoded frame (NF) and adding the display duration attributed to the newly acquired frame to the count value until the count value is equal to or greater than the threshold value, playing a last decoded frame acquired, and decreasing the count value of the threshold value.

2. Method according to claim 1, comprising, before the step of decoding frames of the sequence (VST), a step of selecting video frames to play from among the video frames of the video sequence as a function of the playing speed set point (RST), and a step of reevaluating the display duration (DR) attributed with each selected frame, in a manner so as to respect the playing speed set point.

3. Method according to claim 2, wherein the video sequence (VST) comprises independent frames (I), dependant reference frames (P), and dependant non-reference frames (B), the step of selecting video frames to play comprising selecting independent frames only or selecting independent frames and dependant reference frames only.

4. Method according to one of claims 1 to 3, wherein the video sequence (VST) comprises groups of frames (GOP) of identical structures, the method comprising steps of analyzing the structure of the groups of frames of the video sequence, and removing a frame selected to play if its decoding requires a temporary storage capacity greater than an available storage capacity.

5. Method according to one of claims 1 to 4, wherein the video sequence (VST) comprises groups of frames (GOP) of identical structures, the method comprising steps of analyzing the structure of the groups of frames of the video sequence, and of removing a frame selected to play if the decoding of selected frames of a group of frames requires a treatment capacity greater then an available treatment capacity.

6. Method according to one of claims 1 to 5, wherein the video sequence comprises groups of frames (GOP) of identical structures, the method comprising steps of evaluating a number of frames to store in order to decode a frame selected to play, and of suppressing the frame selected to play if its decoding requires the storage of a number of frames (MB) greater than an available storage capacity (MXB).

7. Method according to one of claims 1 to 6, wherein the video sequence comprises groups of frames (GOP) of identical structures, the method comprising steps of evaluating a number of frame decodings (NbD) to perform in order to decode frames selected to play of the group of frames, and of removing a frame selected to play if the number of decodings to perform is greater than a decoding treatment capacity.

8. Method according to one of claims 1 to 7, comprising a step of correcting display durations (DR) attributed to frames selected to play in order to equalize the frame display durations.

9. Method according to one of claims 1 to 8, wherein the video sequence comprises groups of frames (GOP) of identical structures, the method comprising steps of removing frames from among frames selected to play of a group of frames, to standardize a temporal playing of frames selected to play.

10. Playing device of a sequence of compressed digital video frames, comprising a video frame decoding module (VDCD) to decode a video frame,
**characterized in that** it is configured to implement the method according to one of claims 1 to 9.

## Patentansprüche

1. Verfahren zur Wiedergabe einer Sequenz von komprimierten Digital-Video-Rahmen (VST), umfassend Schritte der Dekodierung von Rahmen der Sequenz, und zur Wiedergabe von abhängig von einem Wiedergabegeschwindigkeitssollwert (RSP) dekodierten Rahmen,
**dadurch gekennzeichnet, dass** es Schritte umfasst, die darin bestehen, jedem Rahmen eine abhängig von dem Wiedergabegeschwindigkeitssollwert bestimmte Anzeigedauer (DR) zuzuordnen, und bei jeder Periode eines Rahmensynchronisationssignals (Vsync):
wenn ein einen kumulierten Anzeigedauerwert darstellender Zählwert (CDR), gleich oder größer ist als ein der Synchronisationssignalperiode entsprechender Schwellwert, einen vorhererfassten dekodierten Rahmen (CF) wiederzugeben und den Zählwert des Schwellwerts zu vermindern, und
wenn der Zählwert kleiner ist als der Schwellwert, einen neuen dekodierten Rahmen (NF) zu erfassen und dem Zählwert die dem neuen erfassten Rahmen zugeordnete Anzeigedauer hinzuzuschlagen, bis der Zählwert gleich oder größer ist als der Schwellwert, einen letzten dekodierten erfassten Rahmen wiederzugeben und den Zählwert des Schwellwerts zu vermindern.

2. Verfahren nach Anspruch 1, umfassend, vor dem Schritt der Dekodierung der Sequenzrahmen (VST), einen Schritt, bei dem abhängig von dem Wiedergabegeschwindigkeitssollwert (RST) wiederzugebende Video-Rahmen der Video-Rahmen der Video-Sequenz ausgewählt werden, sowie einen Schritt der Neubewertung der jedem ausgewählten Rahmen zugeordneten Anzeigedauer (DR), um den Wiedergabegeschwindigkeitssollwert zu beachten.

3. Verfahren nach Anspruch 2, bei dem die Video-Sequenz (VST) unabhängige Rahmen (I), abhängige Referenz-Rahmen (P) und abhängige nicht Referenz-Rahmen (B) umfasst, wobei der Schritt der Auswahl von wiederzugebenden Video-Rahmen einen Schritt umfasst, bei dem nur die unabhängigen Rahmen oder nur die unabhängigen Rahmen und die abhängigen Referenz-Rahmen ausgewählt werden.

4. Verfahren nach einem der Ansprüche 1 bis 3, bei dem die Video-Sequenz (VST) Rahmengruppen (GOP) mit identischen Strukturen umfasst, das Verfahren umfassend Schritte der Analyse der Struktur der Rahmengruppen der Video-Sequenz, und der Zurücknahme eines ausgewählten wiederzugebenden Rahmens, wenn seine Dekodierung eine größere Zwischenspeicherkapazität erfordert als eine verfügbare Speicherkapazität.

5. Verfahren nach einem der Ansprüche 1 bis 4, bei dem die Video-Sequenz (VST) Rahmengruppen (GOP) mit identischen Strukturen umfasst, das Verfahren umfassend Schritte der Analyse der Struktur der Rahmengruppen der Video-Sequenz, und der Zurücknahme eines ausgewählten wiederzugebenden Rahmens, wenn die Dekodierung der ausgewählten Rahmen der Rahmengruppe eine größere Verarbeitungskapazität erfordert als eine verfügbare Verarbeitungskapazität.

6. Verfahren nach einem der Ansprüche 1 bis 5, bei dem die Video-Sequenz Rahmengruppen (GOP) mit identischen Strukturen umfasst, das Verfahren umfassend Schritte der Bewertung einer Anzahl von zu speichernden Rahmen, um einen ausgewählten wiederzugebenden Rahmen zu dekodieren, sowie der Unterdrückung des ausgewählten wiederzugebenden Rahmens, wenn seine Dekodierung eine größere Anzahl von zu speichernden Rahmen (MB) erfordert als eine verfügbare Speicherkapazität (MXB).

7. Verfahren nach einem der Ansprüche 1 bis 6, bei dem die Video-Sequenz Rahmengruppen (GOP) mit identischen Strukturen umfasst, das Verfahren umfassend Schritte der Bewertung einer Anzahl von Rahmendekodierungen (NbD), die durchzuführen sind, um ausgewählte wiederzugebende Rahmen der Rahmengruppe zu dekodieren, und der Zurücknahme eines ausgewählten wiederzugebenden Rahmens, wenn die Anzahl der durchzuführenden Dekodierungen eine Dekodierungsverarbeitungskapazität übersteigt.

8. Verfahren nach einem der Ansprüche 1 bis 7, umfassend einen Schritt der Korrektur der Anzeigedauern (DR), die ausgewählten wiederzugebenden Rahmen zugeordnet sind, um die Anzeigedauern der Rahmen zu vereinheitlichen.

9. Verfahren nach einem der Ansprüche 1 bis 8, bei dem die Video-Sequenz Rahmengruppen (GOP) mit identischen Strukturen umfasst, das Verfahren umfassend Schritte der Unterdrückung von Rahmen ausgewählter wiederzugebender Rahmen einer Rahmengruppe, um eine Zeitteilung der ausgewählten wiederzugebenden Rahmen zu vereinheitlichen.

10. Vorrichtung zur Wiedergabe einer Sequenz von komprimierten Digital-Video-Rahmen, umfassend ein Video-Dekodierungsmodul (VDCD) zum Dekodieren eines Video-Rahmens,
**dadurch gekennzeichnet, dass** es konfiguriert ist, um das Verfahren nach einem der Ansprüche 1 bis 9 durchzuführen.
